# EUROPEAN PATENT SPECIFICATION

(11) **EP 4 495 956 B1**
(45) Date of publication and mention of the grant of the patent: **09.12.2026**
(21) Application number: 23769781.8
(22) Date of filing: 14.03.2023
(51) Int. Cl.: H01B 1/02, H01B 7/00, H01B 7/22, H01B 7/28, H01B 7/42, H01R 4/62, H01R 31/06, B60L 53/16, B60L 53/18, H01R 4/18

(54) **ELECTRIC ENERGY TRANSMISSION ASSEMBLY AND VEHICLE**
ELEKTRISCHE ENERGIEÜBERTRAGUNGSANORDNUNG UND FAHRZEUG
ENSEMBLE DE TRANSMISSION D'ÉNERGIE ÉLECTRIQUE ET VÉHICULE

(30) Priority: 14.03.2022 CN 202210250033
(43) Date of publication of application: 22.01.2025
(73) Proprietor: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081361
(87) International publication number: WO 2023/174279

(56) References cited:
- EP-A1- 3 553 793
- WO-A1-2018/103132
- CN-A- 106 229 034
- CN-A- 106 229 058
- CN-A- 108 199 162
- CN-A- 112 117 023
- CN-A- 112 117 023
- CN-A- 114 758 818
- CN-U- 208 589 273
- CN-Y- 2 914 261
- US-A1- 2013 233 586
- US-A1- 2015 086 807

## Description

The present disclosure claims priority to Chinese Patent Application No. 202210250033.6, entitled "Electric Energy Transmission Assembly and Vehicle", and filed on March 14, 2022.

### TECHNICAL FIELD

The present disclosure relates to the technical field of electric energy transmission, and particular to an electric energy transmission assembly and a vehicle.

### BACKGROUND

In the prior art, electric automobiles are vehicles that are powered by a vehicle-mounted power supply and of which wheels are driven by a motor. The electric automobiles are widely accepted and marketed by people for environmental protection and energy saving. With the development of science and technology, the driving range of electric automobiles has been greatly increased and the charging time has been greatly shortened. Electric automobiles have entered a new stage of development and start to step into the practical use stage. The significant reduction in the charging time is accompanied by the popularization of high-power automobile charging. The diameter of the high-voltage cables used for high-power automobile charging becomes larger and larger. High-voltage wiring is mainly used in the industry of new energy electric automobiles and the related product fields thereof. In the existing high-voltage wiring, the connection cables and terminals between the connectors and the charging socket are copper structures or multi-core aluminum wire structures. The price of pure copper or copper alloy materials is high, which undoubtedly increases the cost of the electric automobiles. Copper is the most ideal conductor for cables. However, the copper is expensive and price variable, and most importantly, there is a shortage of copper resources.

Compared with copper, aluminum has slightly poorer hardness, plasticity and corrosion resistance, but it is lighter in weight and second only to copper in electric conductivity, so aluminum can partially replace copper in the field of electric connection. However, due to the great difference in electrode potential between copper and aluminum, electrochemical corrosion will occur between copper and aluminum after they are directly connected. Aluminum is susceptible to corrosion to cause an increased resistance in the connection area, which is prone to serious consequences in electrical connection, such as function failures, fire disasters, etc. A high-bonding strength copper-aluminum composite conductive material and preparation method therefor are known in the prior art, e.g. from EP3553793A1. An isothermal processed copper cladded aluminum composite is known in the prior art, e.g. from US2015/086807A1. A copper-aluminum composite wire and preparation method therefor are known in the prior art, e.g. from CN112117023A.

Therefore, a new solution is urgently needed in the technical field of automotive electric appliance to solve the above-mentioned problem.

### SUMMARY

The present invention is defined by the independent claims. Further embodiments are set forth in the dependent claims. Any references to inventions or embodiments not falling within the scope of the independent claims are to be interpreted as examples useful for understanding the invention. To solve the above-mentioned problem, the present disclosure proposes a new technical solution.

According to one aspect of the present disclosure, an electric energy transmission assembly is provided, which includes at least one electric connection skeleton and connectors arranged at two ends of the electric connection skeleton. The connector includes a connection terminal, the two ends of the electric connection skeleton are electrically connected with the connection terminals, at least a part of the electric connection skeleton is a rigid conductor, and a material of the rigid conductor includes a copper-aluminum composite material.

A cross section of the electric connection skeleton is one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a P shape, a U shape, a V shape, a W shape, an X shape, a Y shape, a Z shape, a semi-arc shape, an arc shape, and a wavy shape.

A tensile strength of a rigid portion of the electric connection skeleton is higher than 75MPa.

A material of the connection terminals is copper or a copper alloy, and the electric connection skeleton is connected with the connection terminal in a welding or crimping manner.

The electric connection skeleton is composed of an aluminum wire core and a copper layer covering the aluminum wire core.

A material of the aluminum wire core is pure aluminum or an aluminum alloy with an aluminum content of 89% or more.

A junction of the copper layer and the aluminum wire core contains a copper-aluminum transition layer formed by copper atoms and aluminum atoms penetrating into or combining with each other.

The copper-aluminum transition layer includes at least 39wt% of a copper-aluminum mixture.

A copper-aluminum crystalline solid solution layer in which copper atoms and aluminum atoms penetrate into each other is formed between the aluminum wire core and the copper layer.

A mass percent of copper element in the copper-aluminum crystalline solid solution layer is 5% to 93%.

A radial size of the aluminum wire core is in direct proportion to a radial size of the copper layer.

A sectional area of the copper layer at least accounts for 3% of a sectional area of the electric connection skeleton.

The aluminum wire core is a hollow structure.

The electric connection skeleton is provided with at least one heat dissipation fin along a radial direction.

The heat dissipation fin is integrally formed with the copper-aluminum composite material.

A cross section of the heat dissipation fin is one or more selected from a gear shape, a trapezoidal shape, a polygonal shape, a quadrilateral shape, a prismatic shape, a curve shape, and a wavy shape.

There is a plurality of heat dissipation fins, and the plurality of heat dissipation fins are distributed on a periphery of the copper layer.

The plurality of heat dissipation fins is evenly distributed on the periphery of the copper layer.

A maximum radial height of the heat dissipation fins is 50% to 260% of a maximum radial thickness of the copper layer.

The heat dissipation fin is arranged in a spiral shape in an axial direction of the copper layer.

A minimum screw pitch of the spiral shape is a maximum outer diameter of the electric connection skeleton.

At least two said spirals are alternatively arranged in the axial direction of the copper layer.

An insulating layer is provided and sleeved on the periphery of the copper layer.

An insulating layer is provided and sleeved on an outer periphery of the dissipation fin.

A shielding layer and an outer insulating layer are further provided and sleeved on a periphery of the insulating layer.

The connector includes an inner shell having a shielding effect, and the shielding layer is electrically connected with the inner shell.

A material of the inner shell is a conductive metal or conductive polymer material.

One of the connectors is a charging socket.

Another aspect of the present disclosure provides a vehicle, includes an electric energy transmission assembly as described above.

The advantageous effects of the present disclosure are:
1. In the present disclosure, a copper-aluminum composite substrate material is adopted. At the junction face between the aluminum wire core and the copper layer, copper atoms and aluminum atoms penetrate into each other or combine with each other to form a copper-aluminum transition layer under the action of pressure, so that the mechanical and electrical properties of the electric connection skeleton are significantly improved. In addition, a rigid conductor is adopted for the electric connection skeleton, it would not rub against the vehicle shell when the whole vehicle is vibrating, and the integrity of the electric connection skeleton can be ensured.
2. In the present disclosure, the copper layer and the aluminum wire core are composited. Copper atoms and aluminum atoms penetrate into each other and form strong metallic bonds under the action of pressure, which not only avoids the occurrence of electrochemical corrosion between copper and aluminum, but also improves the electrical and mechanical properties of the copper-aluminum connection joint, and therefore the mechanical and electrical properties of the copper-aluminum composite substrate material are significantly improved.
3. The provision of the heat dissipation fin on the periphery of the electric connection skeleton can increase the heat dissipation area of the electric connection skeleton to achieve a better heat dissipation effect.

The other features of the present disclosure and advantages thereof will become clear by the following detailed descriptions of the exemplary embodiments of the present disclosure with reference to the drawings.

### BRIEF DESCRIPTION OF THE DRAWINGS

Drawings incorporated in the specification and constituting a portion of the specification show embodiments of the present disclosure, and are used for illustrating principles of the present disclosure together with the explanations thereof.
FIG. 1 is a structural diagram of the electric energy transmission assembly according to the present disclosure;
FIGS. 2 to 4 are section views of the electric connection skeleton according to the present disclosure;
FIGS. 5 to 7 are section views of the electric connection skeleton with heat dissipation fins according to the present disclosure;
FIG. 8 is a structural diagram of the electric connection skeleton according to the present disclosure.

In the drawings, the reference numerals are as follows:
1. Connector; 2. Connection terminal; 3. Electric connection skeleton; 4. Heat dissipation fin; 5. Insulating layer;
31. Aluminum wire core; 32. Copper layer; 33. Copper-aluminum transition layer.

### DESCRIPTION OF THE EMBODIMENTS

Various embodiments of the present disclosure will now be described in detail with reference to the drawings. It should be noted that, unless otherwise specified, the relative arrangements, numerical expressions and numerical values of the parts and steps set forth in these embodiments do not limit the scope of the present disclosure.

The following descriptions of at least one embodiment are in fact illustrative only and in no way constitute limitations on the present disclosure or application or use thereof.

The techniques, methods and device known to those of ordinary skill in the relevant art may not be discussed in detail, but in suitable situations, such techniques, methods and equipment shall be regarded as part of the specification.

In all the embodiments shown and discussed here, any specific values should be interpreted as merely exemplary, rather than as limitations. Therefore, other embodiments may have different values.

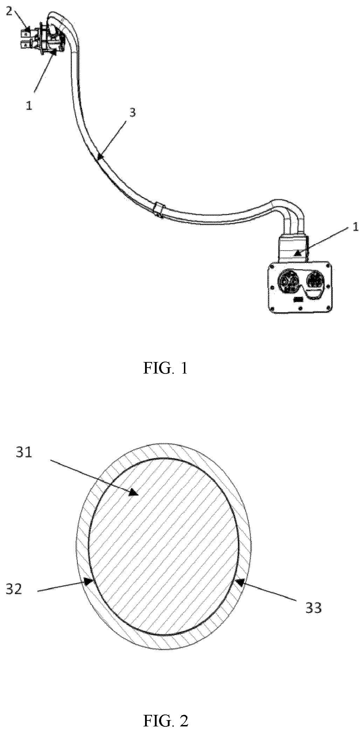

An electric energy transmission assembly, as shown in FIG. 1, includes at least one electric connection skeleton 3 and connectors 1 provided at two ends of the electric connection skeleton 3. The connector 1 includes a connection terminal 2, the two ends of the electric connection skeleton 3 are electrically connected with the connection terminals 2, at least a part of the electric connection skeleton 3 is a rigid conductor, and the material of the rigid conductor includes a copper-aluminum composite material.

At the junction face between the aluminum wire core 31 and the copper layer 32, copper atoms and aluminum atoms penetrate into each other or combine with each other to form a copper-aluminum mixture layer under the action of pressure, which not only avoids the occurrence of electrochemical corrosion between copper and aluminum, but also improves the electrical and mechanical properties of the copper-aluminum connection, and therefore the mechanical and electrical properties of the electric connection skeleton are significantly improved. A rigid conductor is adopted for the electric connection skeleton 3, it would not rub against the vehicle shell when the whole vehicle is vibrating, and the integrity of the electric connection skeleton 3 can be ensured.

In one embodiment, as shown in FIGS. 2 to 4, an insulating layer 5 (not shown in the figures) is provided and sleeved on the periphery of the copper layer 32.

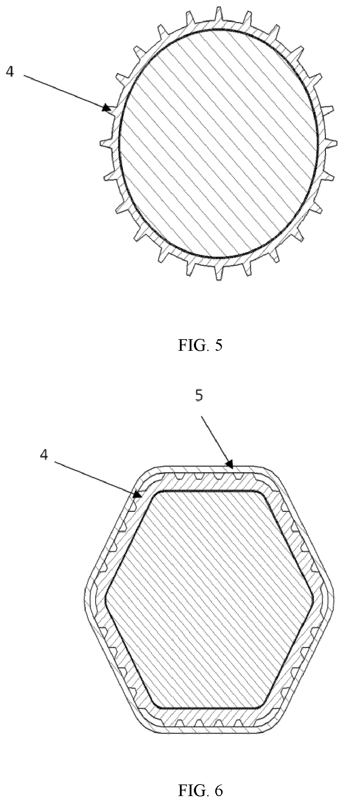

As shown in FIGS. 6 to 7, an insulating layer 5 is provided sleeved on the periphery of the heat dissipation fins 4.

The material of the insulating layer 5 is PVC (Polyvinyl chloride), which on the one hand guarantees the insulation performance and on the other hand has water resistance, wear resistance and hardness. The insulating material for cables may also be one or more selected from rubber, TPE (Thermoplastic Elastomers), XPE, PP (Polypropylene), XLPE (Crosslinked Polyethylene), FEP (Fluorinated Ethylene Propylene), ETFE (Ethylene-Tetra-Fluoro-Ethlene), TPR (Thermo-Plastic-Rubber), and TPFE (Polytetrafluoroethylene).

In a specific embodiment, the cross section of the electric connection skeleton 3 is one or more selected from a circular shape, an oval shape, a rectangular shape, a polygonal shape, an E shape, an F shape, an H shape, a K shape, an L shape, a T shape, a P shape, a U shape, a V shape, a W shape, an X shape, a Y shape, a Z shape, a semi-arc shape, an arc shape, and a wavy shape.

Further, as specifically shown in FIGS. 2 to 4, the cross section of the electric connection skeleton 3 is circular, rectangular and hexagonal, which allow for better wiring according to the outline of the body of the electric vehicle to reduce the consumables for wiring.

The tensile strength of the rigid portion of the electric connection skeleton 3 is higher than 75MPa.

A rigid body refers to an object whose shape and size do not change and within which the relative position of each point does not change during motion and after being acted upon by a force. An absolutely rigid body does not actually exist, but is only an ideal model, because any object would be more or less deformed after being acted upon by a force. If the degree of deformation is extremely small relative to the geometric size of the object itself, the deformation can be omitted in the study of the movement of the object. Thus, during use of the electric connection skeleton 3 made of a rigid body material, the amount of deformation produced is so small that it can be omitted, and the larger the tensile strength of the rigid body is, the smaller the amount of deformation is.

A method for testing the tensile value of the electric connection skeleton 3 is as follows: A universal tensile test machine is used. The two ends of the electric connection skeleton 3 are respectively fixed to a tensile jigs of the universal tensile test machine and stretching at a speed of 50 mm/min is performed, and the tensile value when the electric connection skeleton 3 being pulled apart is recorded. In this embodiment, a tensile value greater than 1600N is a qualified value.

A method for testing the torque of the electric connection skeleton 3 is as follows: A torque tester is used. Electric connection skeleton 3 are bent 90° at the same radius and the same speed, and the torque values of deformation of the electric connection skeletons 3 in the bending process are tested. In this embodiment, a torque value less than 60N•m is an exemplary value.

As regards whether the electric connection skeleton 3 has abnormal sounds, the test method that the electric connection skeleton 3 samples with the same size and the same specification and with different tensile strengths and the connectors 1 with the same dimensions are selected, assembled together and fixed on a vibration test platform, and observe whether the electric connection skeletons 3 have abnormal sounds during the vibration test.

**Table 1: Influence of different tensile strengths on the torque value and abnormal sound of the electric connection skeleton 3**

| Different tensile strengths (MPa) | | | | | | | | | | | |
|---|---|---|---|---|---|---|---|---|---|---|---|
| 60 | 70 | 75 | 85 | 120 | 200 | 280 | 330 | 380 | 430 | 480 | 500 |

| Tensile value of electric connection skeleton 3 when being pulled apart (N) | | | | | | | | | | | |
|---|---|---|---|---|---|---|---|---|---|---|---|
| 1422 | 1612 | 1688 | 1709 | 1759 | 1815 | 1856 | 1909 | 1950 | 1989 | 2040 | 2067 |

| Torque value when bending in a horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electric connection skeleton 3 has abnormal sounds | | | | | | | | | | | |
|---|---|---|---|---|---|---|---|---|---|---|---|
| Yes | Yes | No | No | No | No | No | No | No | No | No | No |

It can be seen from Table 1 that when the tensile strength of the electric connection skeleton 3 is less than 75MPa, the tensile value of the electric connection skeleton 3 when being pulled apart is less than 1600N. In this case, the strength of the electric connection skeleton 3 itself is not high and it is pulled apart easily when being acted upon by a small external force, resulting in a functional failure of the electric connection skeleton 3, and consequently the purpose of electric energy transmission cannot be achieved.

On the other hand, the greater the tensile strength value of the electric connection skeleton 3 is, the less likely the electric connection skeleton 3 is to be deformed, and accordingly the less likely the electric connection skeleton 3 is to have abnormal sounds caused by vibration relative to the connectors 1 connected to its two ends during the vibration test. On the contrary, the smaller the tensile strength value of the electric connection skeleton 3 is, the more likely the electric connection skeleton 3 is to be deformed, and accordingly the more likely the electric connection skeleton 3 is to have abnormal sounds caused by vibration relative to the connectors 1 connected to its two ends during the vibration test. From the above Table 1, it can be seen that when the tensile strength of the electric connection skeleton 3 is less than or equal to 75MPa, the electric connection skeleton 3 produces abnormal sounds during the vibration test. Therefore, the inventor exemplarily selects the tensile strength of the electric connection skeleton 3 to be higher than 75MPa.

Also, it can be seen from Table 1 that when the tensile strength of the electric connection skeleton 3 is higher than 480MPa, the torque value of the electric connection skeleton 3 when being bent 90° is greater than 60N•m. At this point, the electric connection skeleton 3 is not bent easily. Therefore, the inventor further exemplarily selects the tensile strength of the electric connection skeleton 3 to be higher than 75MPa and lower than or equal to 480MPa.

The material of the connection terminals 2 is copper or a copper alloy, and the electric connection skeleton 3 is connected with the connection terminals 2 in a welding or crimping manner.

To be specific, according to the actual use environment, the connection terminals 2 and the electric connection skeleton 3 may be connected by welding. A copper-clad aluminum composite conductor has good weldability. Since a copper-clad aluminum has a layer of pure copper on its surface, it has the same weldability as a pure copper wire, and therefore can be better welded with the connection terminals 2.

The specific welding method is one or more selected from a resistance welding, a friction welding, an ultrasonic welding, an arc welding, a laser welding, an electron beam welding, a pressure diffusion welding, and a magnetic induction welding.

Resistance welding refers to a method of using a large current to pass through the contact point between an electrode and a workpiece and generating heat by the contact resistance to achieve welding.

Friction welding refers to a method of using the heat generated by rubbing of the contact face of the workpieces as a heat source and enabling the workpiece to be subjected to plastic deformation under the action of pressure so as to perform welding.

Ultrasonic welding is a method in which high-frequency vibration waves are transmitted to the surfaces of the two objects to be welded, and under pressurization, the surfaces of the two objects rub against each other to achieve a fusion between two molecular layers.

Arc welding is a method in which an electric arc is used as a heat source, and the electric energy is converted into the heat and mechanical energy required by welding by using the physical phenomenon of air discharge, thereby achieving the purpose of connecting metals. The method mainly includes shielded metal arc welding, submerged arc welding, gas shielded welding, etc.

Laser welding is an efficient and precise welding method that takes a laser beam with high energy density as a heat source.

Electron beam welding is a method to achieve welding by bombarding the welding face placed in a vacuum or non-vacuum environment with an accelerated and focused electron beam to cause the workpieces to be welded to melt for welding.

Pressure welding is a method of applying pressure to the workpiece to be welded to bring the connection faces into close contact to produce certain plastic deformation to complete the welding.

Diffusion welding refers to a solid-state welding method in which the workpieces are subjected to the pressurization at high temperature without producing visible deformation and relative movement.

Magnetic induction welding is a method in which the two workpieces to be welded produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar properties or dissimilar properties can be welded together.

Crimping is a production process in which the electric connection skeleton 3 and the connection terminals 2 are assembled and stamped into a whole by using a crimping machine. The advantage of crimping lies in mass production, and the use of an automatic crimping machine makes it possible to quickly manufacture large number of products of stable quality.

Regarding the specific welding or crimping method, an appropriate connection method or combination of connection methods is selected according to the actual state of the electric connection skeleton 3 and the connection terminals 2, so as to achieve effective electric connection.

In a specific embodiment, as shown in FIGS. 2 to 4, the electric connection skeleton 3 is composed of an aluminum wire core 31 and a copper layer 32 covering the aluminum wire core 31.

A copper-clad aluminum cable replaces the current copper-core cable. Firstly, the copper-clad aluminum conductor reduces the alternating current resistance. According to the principle of the skin effect, a current passing through the surface part of a single conductor per unit volume is greater than a current passing through the center part of the conductor per unit area. For a conductor with a large cross section, the current passing through its center part is smaller than that passing through its circumference part, so it is most reasonable and economical to make the center conductor and the circumference conductor with different metallic materials. Furthermore, the copper-clad aluminum composite conductor increases the total area of the conductor, and also increases the surface area of the conductor, so that the heat dissipation area of the conductor is increased and the heat dissipation condition of the cable is improved. Secondly, the copper-clad aluminum composite conductor has good corrosion resistance. Aluminum is more susceptible to corrosion and oxidation than copper. In the copper-clad aluminum conductor, aluminum is completely covered and does not contact air and water, so the physical and chemical properties of the entire conductor are more stable. Thirdly, as is obvious, the copper-clad aluminum composite conductor has the characteristics of low cost and light weight. Compared with a copper-core cable having the same technical indexes, the copper-clad aluminum composite conductor cable can save more than 25% of the cost, and the weight of it is almost half of that of a pure copper wire.

In addition, the copper-clad aluminum composite conductor has good weldability. Since the copper-clad aluminum wire has a layer of pure copper on its surface, it has the same weldability as a pure copper wire and can be conveniently installed and produced. In a word, the copper-clad aluminum composite conductor not only maintains the characteristics of high conductivity, reliable surface electrical contact, corrosion resistance, etc., but also has the advantages of small specific gravity, abundant resources, low price, etc. of aluminum, and it also has good flexibility and can be easily welded.

In a specific embodiment, the material of the aluminum wire core 31 is pure aluminum or an aluminum alloy with an aluminum content of 89% or more.

Pure aluminum or an aluminum alloy with an aluminum content of 89% or more is used instead of the copper conductor core commonly used in the prior art. The density of aluminum is only one-third of copper. According to the difference in the electrical property of resistivity of solid conductor cores, under the premise of satisfying the same conductivity, the wire diameter ratios of aluminum and copper are only 1.28 times, and the weight of an aluminum material is only half of that of a copper material with the same current carrying capacity. Therefore, the wire weight can be greatly reduced without increasing the cable loading space, which is conducive to the weight reduction of the vehicle. In addition, the use of an aluminum conductor core (comprising aluminum or its alloy material) that has small specific gravity and a low material price instead of a copper conductor core that has large specific gravity and a high material price can reduce the material and transportation costs, thereby saving the production cost of motor vehicles.

Exemplarily, the aluminum alloy is an aluminum-copper alloy or an aluminum-magnesium alloy or an aluminum-lithium alloy or an aluminum-manganese alloy or an aluminum-zinc alloy or an aluminum-silicon alloy which contain an aluminum content of 89% or more.

In a specific embodiment, a junction of the copper layer 32 and the aluminum wire core 31 contains includes a copper-aluminum transition layer 33 formed by copper atoms and aluminum atoms penetrating into or combining with each other.

The copper-aluminum transition layer 33 described in the present disclosure is a copper-aluminum transition layer 33 formed by copper atoms and aluminum atoms penetrating into or combining with each other under the action of pressure at the junction surface of the copper layer 32 and the aluminum layer, which not only avoids the occurrence of electrochemical corrosion between copper and aluminum, but also improves the electrical and mechanical properties of the copper-aluminum connection, so that the mechanical and electrical properties of the copper-aluminum composite substrate material are significantly improved.

In some embodiments, the copper-aluminum transition layer 33 includes at least 39wt% of a copper-aluminum mixture. When the copper-aluminum transition layer 33 includes less than 39wt% of a copper-aluminum mixture, the content of the other components in the copper-aluminum transition layer 33 is higher than or equal to 61wt%. If the proportion of copper pure element and aluminum pure element in the copper-aluminum transition layer 33 is large, it indicates that the copper-aluminum welding is not sufficient and the copper pure element and aluminum pure element are not fused into a copper-aluminum mixture. If the proportion of a copper-aluminum compound in the copper-aluminum transition layer 33 is large, in which the copper-aluminum compound has very poor conductivity and high brittleness, the mechanical and electrical properties of the copper-aluminum composite substrate material would be reduced when the content of the copper-aluminum compound is high. In order to find an appropriate weight percent of copper-aluminum mixtures in the copper-aluminum transition layer 33, the inventor carried out relevant tests. The inventor carried out drawing force tests and voltage drop tests for copper-aluminum transition layers 33 with different weight percent of copper-aluminum mixtures. If the drawing force of the electric connection skeleton 3 is less than 3000N, it is unqualified, and if the voltage drop of the electric connection skeleton 3 is greater than 0.5mV, it is unqualified. The results are shown in Table 2.

**Table 2: Influence of the weight percent of the copper-aluminum mixture in the copper-aluminum transition layer 33 on the drawing force and the voltage drop of the electric connection skeleton**

| Weight percent of the copper-aluminum mixture in the copper-aluminum transition layer 33 (wt%) | | | | | | | | | |
|---|---|---|---|---|---|---|---|---|---|
| 38 | 39 | 40 | 45 | 50 | 60 | 70 | 80 | 85 | 90 |

| Drawing force of the electric connection skeleton 3 (N) | | | | | | | | | |
|---|---|---|---|---|---|---|---|---|---|
| 2956 | 3090 | 3232 | 3563 | 3786 | 4009 | 4125 | 4218 | 4430 | 4569 |

| Voltage drop of the electric connection skeleton 3 (mV) | | | | | | | | | |
|---|---|---|---|---|---|---|---|---|---|
| 0.51 | 0.49 | 0.46 | 0.42 | 0.38 | 0.35 | 0.28 | 0.24 | 0.19 | 0.15 |

It can be seen from Table 2 that when the copper-aluminum transition layer 33 includes less than 39wt% of a copper-aluminum mixture, the drawing force of the electric connection skeleton 3 is less than 3000N, which is not qualified; at the same time, the voltage drop of the electric connection skeleton 3 is greater than 0.5mV, which cannot satisfy the requirement for the mechanical and electrical properties of the electric connection skeleton 3. As the proportion of the copper-aluminum mixture in the copper-aluminum transition layer 33 gradually increases, the mechanical and electrical properties of the electric connection skeleton 3 are gradually enhanced. Therefore, the copper-aluminum transition layer 33 includes not less than 39wt% of a copper-aluminum mixture.

A copper-aluminum crystalline solid solution layer in which copper atoms and aluminum atoms penetrate into each other is formed between the aluminum wire core and the copper layer. The copper-aluminum crystalline solid solution refers to an alloy phase in which the copper and aluminum solute atoms dissolve in the solvent lattices and the type of the solvent is still maintained. In general, the crystal formed by copper as a matrix and aluminum atoms or molecules dissolved in the matrix can avoid the occurrence of electrochemical corrosion between copper and aluminum. The presence of the copper-aluminum crystalline solid solution layer improves the electrical and mechanical properties of copper-aluminum connection.

The mass percent of copper element in the copper-aluminum crystalline solid solution layer is 5% to 93%.

The copper-aluminum crystalline solid solution layer contains copper element. In order to prevent the proportion of copper element in the copper-aluminum solid solution layer from being too large or too small thereby reducing the electrical properties of the copper-aluminum crystalline solid solution layer, the inventor carried out relevant tests. The inventor carried out voltage drop tests for copper-aluminum crystalline solid solution layers with different mass percent of copper element. If the voltage drop of the copper-aluminum solid solution is greater than 0.5mV, it is unqualified. The results are shown in Table 3.

**Table 3: Influence of different percent of copper element on the voltage drop of the copper-aluminum crystalline solid solution layer**

| Mass fraction of copper element in the copper-aluminum crystalline solid solution layer (%) | | | | | | | | | | | |
|---|---|---|---|---|---|---|---|---|---|---|---|
| 3 | 5 | 8 | 10 | 20 | 35 | 50 | 65 | 80 | 90 | 93 | 95 |

| Voltage drop of the copper-aluminum crystalline solid solution layer (mV) | | | | | | | | | | | |
|---|---|---|---|---|---|---|---|---|---|---|---|
| 0.52 | 0.49 | 0.45 | 0.42 | 0.38 | 0.33 | 0.29 | 0.34 | 0.39 | 0.45 | 0.48 | 0.53 |

It can be seen from Table 3 that when the mass percent of copper element in the copper-aluminum crystalline solid solution layer is higher than 93wt% or less than 5%, the voltage drop of the copper-aluminum crystalline solid solution layer is greater than 0.5mV, which cannot satisfy the requirement for the electrical properties. That is to say, it is found by the inventor that, contrary to people's common sense, when the mass percent of copper element in the copper-aluminum crystalline solid solution layer is higher than 93%, the conductivity does not increase correspondingly, but the voltage drop increases. Therefore, the inventor exemplarily selects the mass percent of copper element in the copper-aluminum crystalline solid solution layer to be 5% to 93%.

The radial size of the aluminum wire core 31 is in direct proportion to the radial size of the copper layer 32. The radial size of the aluminum wire core 31 and that of the copper layer 32 vary proportionally to ensure the connection strength.

The sectional area of the copper layer 32 accounts for at least 3% of the sectional area of the electric connection skeleton 3.

Due to the principle of the skin effect, a current passing through the copper layer per unit surface area is greater than a current passing through the aluminum core per unit surface area. If the proportion of the sectional area of the copper layer 32 to the sectional area of the electric connection skeleton 3 is less than 3%, the resistance will increase and the use is affected.

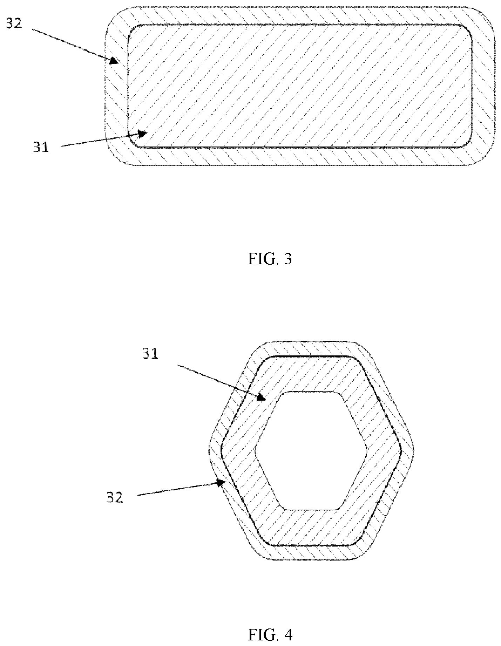

In a specific embodiment, as shown in FIG. 4, the aluminum wire core 31 is a hollow structure.

According to the principle of the skin effect, the current passing through the surface part of a single conductor per unit volume is greater than the current passing through the center part of the conductor per unit area. For a conductor with a large cross section, the current passing through its center part is smaller than that passing through its circumference part, so the aluminum wire core 31 conductor at the center can be configured as a hollow structure. This practice can also reduce the weight of the electric connection skeleton 3, thus reducing the cost of the electric energy transmission assembly.

In a specific embodiment, as shown in FIG. 5, the electric connection skeleton 3 is provided with at least one heat dissipation fin 4 along a radial direction.

The provision of the heat dissipation fin 4 can increase the heat dissipation area of the electric connection skeleton 3 so as to improve the heat dissipation effect of the electric energy transmission assembly.

In a specific embodiment, the heat dissipation fin 4 is formed integrally with the copper-aluminum composite material.

The heat dissipation fin 4 and the electric connection skeleton 3 is formed integrally using the same material, thereby improving the production efficiency.

The cross section of the heat dissipation fin 4 is one or more selected from a gear shape, a trapezoidal shape, a polygonal shape, a quadrilateral shape, a prismatic shape, a curve shape, and a wavy shape.

As specifically shown in FIG. 6, the cross section of the heat dissipation fin 4 is trapezoidal.

As shown in FIGS. 5 to 6, there is a plurality of heat dissipation fins 4, and the plurality of heat dissipation fins 4 are distributed on the periphery of the copper layer 32.

Further, the plurality of heat dissipation fins 4 are evenly distributed on the periphery of the copper layer 32.

The provision of the plurality of heat dissipation fins 4 on the periphery of the electric connection skeleton 3 not only increases the heat dissipation area to achieve better heat dissipation effect, but also ensures that all parts of the electric connection skeleton 3 are subjected to uniform force during the bending process of the electric connection skeleton 3 to ensure that the insulating layer 5 covering the electric connection skeleton 3 is subjected to uniform force.

The maximum radial height of the heat dissipation fins 4 is 50% to 260% of the maximum radial thickness of the copper layer 32.

The setting of the maximum radial height of the heat dissipation fins 4 has certain influence on the temperature rise of the electric connection skeleton 3.

In order to verify the influence of the proportion of the radial height of the heat dissipation fins 4 to the maximum radial thickness of the copper layer 32 on the temperature rise of the electric connection skeleton 3, the inventor carried out relevant tests. The test method is as follows. The same electric connection skeletons 3 are selected, the heat dissipation fins 4 are formed integrally with the electric connection skeletons 3, and the respective ratios of the radial height of the heat dissipation fins 4 to the maximum radial thickness of the copper layer 32 are different. In a sealed environment, the same current is passed through the different electric connection skeletons 3. A temperature rise less than 50K is a qualified value, and after the insulating layer 5 is peeled off, the electric connection skeletons 3 are bent 60° to observe whether the heat dissipation fins 4 are deformed. The results are shown in Table 4.

**Table 4: Influence of the proportion of the maximum radial height of the heat dissipation fins 4 to the maximum radial thickness of the copper layer 32 on the temperature rise of the electric connection skeleton 3 and the deformation of the heat dissipation fin 4**

| The proportion of the maximum radial height of the heat dissipation fins 4 to the maximum outer diameter of the electric connection skeleton 3 (%) | | | | | | | | | | | | |
|---|---|---|---|---|---|---|---|---|---|---|---|---|
| 10 | 20 | 50 | 80 | 100 | 130 | 140 | 160 | 180 | 200 | 260 | 280 | 300 |

| Temperature rise of the electric connection skeleton 3 (K) | | | | | | | | | | | | |
|---|---|---|---|---|---|---|---|---|---|---|---|---|
| 50.9 | 50.5 | 47.5 | 44 | 41.2 | 39.8 | 38.5 | 37.1 | 33.2 | 30.9 | 27.5 | 26.8 | 26.5 |

| Whether the heat dissipation fins 4 are deformed | | | | | | | | | | | | |
|---|---|---|---|---|---|---|---|---|---|---|---|---|
| No | No | No | No | No | No | No | No | No | No | No | Yes | Yes |

It can be seen from Table 4 that when the proportion of the radial height of the heat dissipation fins 4 to the maximum radial thickness of the copper layer 32 is less than 50%, the temperature rise of the electric connection skeleton 3 is greater than 50K, which does not meet the requirement. When the proportion of the radial height of the heat dissipation fins 4 to the maximum radial thickness of the copper layer 32 is greater than 260%, the heat dissipation fins 4 are deformed, which does not meet the requirement. Therefore, the inventor sets the maximum radial height of the heat dissipation fins 4 to be 50% to 260% of the maximum outer diameter of the electric connection skeleton 3.

The heat dissipation fin 4 is arranged in a spiral shape in an axial direction of the copper layer 32.

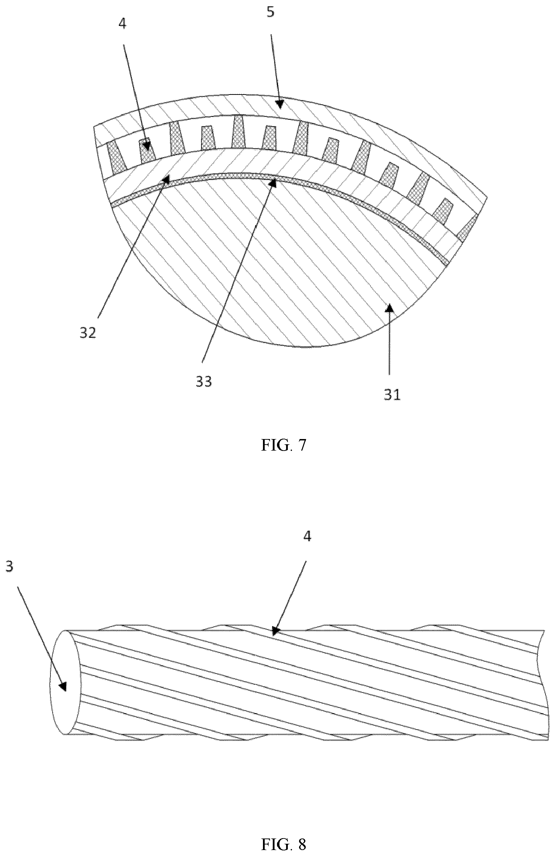

As shown in FIG. 8, the heat dissipation fin 4 is arranged in a spiral shape. A channel of spiral shape is formed between the heat dissipation fin 4 and the electric connection skeleton 3 and insulating layer 5. This design can ensure that the heat dissipation effect is the same at everywhere of the electric connection skeleton 3, and avoid local overheating. Meanwhile, the radial height of the same one heat dissipation fin 4 is spirally arranged is the same, so that the gap between the insulating layer 5 and the electric connection skeleton 3 is also the same, which is more conductive to heat dissipation.

The minimum screw pitch of the spiral shape is the maximum outer diameter of the electric connection skeleton 3.

The minimum screw pitch of the spiral shape of the heat dissipation fins 4 is higher than or equal to the maximum outer diameter of the electric connection skeleton 3. If the screw pitch is too small, the gap between the heat dissipation arms is small and the heat dissipation effect is not achieved.

In a specific embodiment, at least two said spirals are alternatively arranged in the axial direction of the copper layer 32. In addition, on the same length of copper layer 32, if the spirals are alternatively arranged, the length of the helices is greater than the spirals being arranged in parallel, which increases the heat dissipation area, so that the heat dissipation effect of the electric energy transmission assembly is better.

As shown in FIG. 8, at least two spirals are arranged alternatively, which can increase the heat dissipation area of the electric connection skeleton 3. An insulating layer 5 is provided and sleeved on the periphery of the heat dissipation fins 4, and at least two heat dissipation arms are alternatively arranged to enable the insulating layer 5 to be subjected to a more uniform force. The heat dissipation fins 4 are arranged in a spiral shape. A channel of spiral shape is formed between the heat dissipation fins 4 and the electric connection skeleton 3 and insulating layer 5. This design can ensure that the heat dissipation effect is the same at everywhere of the electric connection skeleton 3, and avoid local overheating. Meanwhile, the radial height of the same one heat dissipation fin 4 spirally arranged is the same, so that the gap between the insulating layer 5 and the electric connection skeleton 3 is also the same, which is more conductive to heat dissipation. In addition, on the same length of electric connection skeleton 3, if the heat dissipation fins 4 are spirally arranged, the length of the heat dissipation fins 4 is greater than the heat dissipation fins 4 being arranged in parallel, which increases the heat dissipation area so that the heat dissipation effect of the electric energy transmission assembly is better.

In a specific embodiment, an insulating layer 5 is provided and sleeved on the periphery of the copper layer. The insulating layer 5 can prevent the electric connection skeleton 3 from contacting the vehicle shell and thus avoiding the short circuit phenomenon.

In a specific embodiment, an insulating layer is provided and sleeved on the periphery of the heat dissipation fins. The insulating layer can prevent the electric connection skeleton 3 from contacting the other parts inside the vehicle body and thus avoiding short circuit.

In addition, when an insulating layer 5 is provided and sleeved on the periphery of the heat dissipation fins 4, the gap between the insulating layer 5 and the heat dissipation fins 4 forms a cavity. A heat dissipation device may be adopted to convey air to the cavity to form air circulation, thereby achieving a better heat dissipation effect.

In an electric energy transmission assembly according to the above, a shielding layer and an outer insulating layer are also provided and sleeved on the periphery of the insulating layer 5.

The shielding layer can reduce the interference of the electromagnetic radiation generated by the electric connection skeleton 3 on the other electrical devices in the vehicle. The material of the shielding layer is a conductor, and it needs to be grounded. So, the insulating layer 5 is provided between the shielding layer and the electric connection skeleton 3 to prevent contact between the two. The outer insulating layer can prevent the shielding layer from contacting the vehicle shell and thus avoiding short circuit.

In a specific embodiment, the connector 1 includes an inner shell having a shielding effect, and the shielding layer is electrically connected with the inner shell.

The material of the inner shell is a conductive metal or conductive polymer material.

The shielding inner shell is electrically connected with the shielding layer to form a complete shielding device. It can play the role of a shielding layer to effectively shield the electromagnetic interference generated by the electrification of the electric connection skeleton 3, and therefore the use of a shielding net is saved, and the cost of the connector 1 assembly is reduced.

In a specific embodiment, one of the connectors 1 is a charging socket.

One end of the electric connection skeleton 3 is connected to a terminal in the charging socket, and the other end can be connected to a vehicle-mounted battery to form a complete charging system.

In a specific embodiment, an electric vehicle including the above-described electric energy transmission assembly is provided.

Although some specific embodiments of the present disclosure have been described in detail by the examples, it should be understood by those skilled in the art that the above examples are for illustrative purposes only.

## Claims

1. An electric energy transmission assembly, comprising at least one electric connection skeleton (3) and connectors (1) provided at two ends of the electric connection skeleton (3), wherein the connector (1) comprises a connection terminal (2), the two ends of the electric connection skeleton (3) are electrically connected with the connection terminals (2), at least a part of the electric connection skeleton (3) is a rigid conductor, and a material of the rigid conductor comprises a copper-aluminum composite material, wherein the electric connection skeleton (3) is composed of an aluminum wire core (31) and a copper layer (32) covering the aluminum wire core (31),
**characterized in that** the electric connection skeleton (3) is provided with a plurality of heat dissipation fins (4) along a radial direction, and the plurality of heat dissipation fins (4) are distributed on a periphery of the copper layer (32), a cross section of the heat dissipation fin (4) is trapezoidal, an insulating layer (5) is provided and sleeved on a periphery of the heat dissipation fins (4), the plurality of the heat dissipation fins (4) comprise first heat dissipation fins and second heat dissipation fins alternately arranged along the periphery of the copper layer (32), wherein each first heat dissipation fin is connected at both ends in the radial direction to the copper layer (32) and the insulating layer (5), respectively, and each second heat dissipation fin is connected at one end in the radial direction to the copper layer (32) and spaced apart at the other end from the insulating layer (5).

2. The electric energy transmission assembly according to claim 1, wherein a tensile strength of a rigid portion of the electric connection skeleton (3) is higher than 75MPa.

3. The electric energy transmission assembly according to claim 1, wherein a junction of the copper layer (32) and the aluminum wire core (31) contains a copper-aluminum transition layer (33) formed by copper atoms and aluminum atoms penetrating into or combining with each other;
preferably wherein
the copper-aluminum transition layer (33) comprises at least 39wt% of a copper-aluminum mixture.

4. The electric energy transmission assembly according to claim 1, wherein a copper-aluminum crystalline solid solution layer in which copper atoms and aluminum atoms penetrate into each other is formed between the aluminum wire core (31) and the copper layer (32);
preferably wherein
a mass percent of copper element in the copper-aluminum crystalline solid solution layer is 5% to 93%.

5. The electric energy transmission assembly according to claim • , wherein a radial size of the aluminum wire core (31) is in direct proportion to a radial size of the copper layer (32);
or
wherein a sectional area of the copper layer (32) at least accounts for 3% of a sectional area of the electric connection skeleton (3);
or
wherein the aluminum wire core (31) is a hollow structure.

6. The electric energy transmission assembly according to claim 1, wherein the heat dissipation fin (4) is integrally formed with the copper-aluminum composite material.

7. The electric energy transmission assembly according to claim 1,
wherein a maximum radial height of the heat dissipation fins (4) is 50% to 260% of a maximum radial thickness of the copper layer (32).

8. The electric energy transmission assembly according to claim 1, wherein the heat dissipation fin (4) is arranged in a spiral shape in an axial direction of the copper layer (32).

9. The electric energy transmission assembly according to claim 8, wherein a minimum screw pitch of the spiral shape is a maximum outer diameter of the electric connection skeleton (3);
or
wherein at least two said spirals are arranged alternatively in the axial direction of the copper layer (32).

10. The electric energy transmission assembly according to claim 1, wherein an insulating layer (5) is provided and sleeved on a periphery of the heat dissipation fin (4).

11. The electric energy transmission assembly according to claim 1 or 10, wherein a shielding layer and an outer insulating layer (5) are further provided and sleeved on a periphery of the insulating layer (5);
preferably wherein
the connector (1) comprises an inner shell having a shielding effect, and the shielding layer is electrically connected with the inner shell;
preferably wherein
a material of the inner shell is a conductive metal or conductive polymer material.

12. A vehicle, wherein the vehicle comprises the electric energy transmission assembly according to any one of claims 1 to 11.

## Patentansprüche

1. Elektrische Energieübertragungsanordnung, umfassend mindestens ein elektrisches Verbindungsgerüst (3) und an zwei Enden des elektrischen Verbindungsgerüsts (3) bereitgestellte Verbinder (1), wobei der Verbinder (1) einen Verbindungsanschluss (2) umfasst, die zwei Enden des elektrischen Verbindungsgerüsts (3) elektrisch mit den Verbindungsanschlüssen (2) verbunden sind, mindestens ein Teil des elektrischen Verbindungsgerüsts (3) ein steifer Leiter ist und ein Material des steifen Leiters ein Kupfer-Aluminium-Verbundmaterial umfasst, wobei das elektrische Verbindungsgerüst (3) aus einem Aluminiumdrahtkern (31) und einer Kupferschicht (32) besteht, die den Aluminiumdrahtkern (31) bedeckt,
**dadurch gekennzeichnet, dass** das elektrische Verbindungsgerüst (3) mit einer Vielzahl von Wärmeableitungsrippen (4) in einer radialen Richtung bereitgestellt ist, und die Vielzahl der Wärmeableitungsrippen (4) an einem Umfang der Kupferschicht (32) verteilt sind, ein Querschnitt der Wärmeableitungsrippen (4) trapezförmig ist, eine Isolierschicht (5) bereitgestellt und auf einem Umfang der Wärmeableitungsrippen (4) aufgemantelt ist, wobei die Vielzahl von Wärmeableitungsrippen (4) erste Wärmeableitungsrippen und zweite Wärmeableitungsrippen umfasst, die abwechselnd entlang des Umfangs der Kupferschicht (32) angeordnet sind, wobei jede erste Wärmeableitungsrippe an beiden Enden jeweils radial mit der Kupferschicht (32) und der Isolierschicht (5) verbunden ist, und jede zweite Wärmeableitungsrippe an einem Ende radial mit der Kupferschicht (32) verbunden und am anderen Ende von der Isolierschicht (5) beabstandet ist.

2. Elektrische Energieübertragungsanordnung nach Anspruch 1, wobei eine Zugfestigkeit eines steifen Abschnitts des elektrischen Verbindungsgerüsts (3) höher als 75 MPa ist.

3. Elektrische Energieübertragungsanordnung nach Anspruch 1, wobei der Übergang zwischen der Kupferschicht (32) und dem Aluminiumdrahtkern (31) eine Kupfer-Aluminium-Übergangsschicht (33) enthält, die aus ineinander eindringenden oder sich miteinander verbindenden Kupferatomen und Aluminiumatomen besteht;
wobei vorzugsweise
die Kupfer-Aluminium-Übergangsschicht (33) mindestens 39 Gew.-% einer Kupfer-Aluminium-Mischung umfasst.

4. Elektrische Energieübertragungsanordnung nach Anspruch 1, wobei zwischen dem Aluminiumdrahtkern (31) und der Kupferschicht (32) eine Kupfer-Aluminium-Mischkristallschicht gebildet wird, in der Kupferatome und Aluminiumatome ineinander eindringen;
wobei vorzugsweise
der Massenanteil des Kupferelements in der Kupfer-Aluminium-Mischkristallschicht 5% bis 93% beträgt.

5. Elektrische Energieübertragungsanordnung nach Anspruch • wobei eine radiale Abmessung des Aluminiumdrahtkerns (31) direkt proportional zu einer radialen Abmessung der Kupferschicht (32) ist;
oder
wobei eine Querschnittsfläche der Kupferschicht (32) mindestens 3% einer Querschnittsfläche des elektrischen Verbindungsgerüsts (3) ausmacht;
oder
wobei der Aluminiumdrahtkern (31) eine Hohlstruktur ist.

6. Elektrische Energieübertragungsanordnung nach Anspruch 1, wobei die Wärmeableitungsrippe (4) einstückig mit dem Kupfer-Aluminium-Verbundmaterial ausgebildet ist.

7. Elektrische Energieübertragungsanordnung nach Anspruch 1,
wobei eine maximale radiale Höhe der Wärmeableitungsrippen (4) 50 % bis 260 % der maximalen radialen Dicke der Kupferschicht (32) beträgt.

8. Elektrische Energieübertragungsanordnung nach Anspruch 1, wobei die Wärmeableitungsrippe (4) spiralförmig in einer Axialrichtung der Kupferschicht (32) angeordnet ist.

9. Elektrische Energieübertragungsanordnung nach Anspruch 8, wobei eine minimale Steigung der Spiralform der maximale Außendurchmesser des elektrischen Verbindungsgerüsts (3) ist;
oder
wobei mindestens zwei der Spiralen abwechselnd in der Axialrichtung der Kupferschicht (32) angeordnet sind.

10. Elektrische Energieübertragungsanordnung nach Anspruch 1, wobei eine Isolierschicht (5) bereitgestellt und auf einem Umfang der Wärmeableitungsrippe (4) aufgemantelt ist.

11. Elektrische Energieübertragungsanordnung nach Anspruch 1 oder 10, wobei eine Abschirmschicht und eine äußere Isolierschicht (5) ferner bereitgestellt und auf einem Umfang der Isolierschicht (5) aufgemantelt sind;
wobei vorzugsweise
der Verbinder (1) eine innere Hülle umfasst, die eine Abschirmwirkung aufweist, wobei die Abschirmschicht elektrisch mit der inneren Hülle verbunden ist;
wobei vorzugsweise
ein Material der inneren Hülle ein leitfähiges Metall oder ein leitfähiges Polymermaterial ist.

12. Fahrzeug, wobei das Fahrzeug die elektrische Energieübertragungsanordnung nach einem der Ansprüche 1 bis 11 umfasst.

## Revendications

1. Ensemble de transmission d'énergie électrique, comprenant au moins un squelette de connexion électrique (3) et des connecteurs (1) fournis aux deux extrémités du squelette de connexion électrique (3), dans lequel le connecteur (1) comprend une borne de connexion (2), les deux extrémités du squelette de connexion électrique (3) sont connectées électriquement aux bornes de connexion (2), au moins une partie du squelette de connexion électrique (3) est un conducteur rigide, et un matériau du conducteur rigide comprend un matériau composite cuivre-aluminium, dans lequel le squelette de connexion électrique (3) est composé d'une âme de fil en aluminium (31) et d'une couche de cuivre (32) couvrant l'âme de fil en aluminium (31),
**caractérisé en ce que** le squelette de connexion électrique (3) est pourvu d'une pluralité d'ailettes de dissipation de chaleur (4) le long d'une direction radiale, et la pluralité d'ailettes de dissipation de chaleur (4) sont réparties sur la périphérie de la couche de cuivre (32), une section transversale de l'ailette de dissipation de chaleur (4) est trapézoïdale, une couche isolante (5) est fournie sur et placée autour de la périphérie des ailettes de dissipation de chaleur (4), la pluralité des ailettes de dissipation de chaleur (4) comprennent des premières ailettes de dissipation de chaleur et des secondes ailettes de dissipation de chaleur agencées alternativement le long de la périphérie de la couche de cuivre (32), dans lequel chaque première ailette de dissipation de chaleur est reliée à ses deux extrémités dans la direction radiale à la couche de cuivre (32) et à la couche isolante (5), respectivement, et chaque seconde ailette de dissipation de chaleur est reliée à une extrémité dans la direction radiale à la couche de cuivre (32) et espacée à l'autre extrémité de la couche isolante (5).

2. Ensemble de transmission d'énergie électrique selon la revendication 1, dans lequel une résistance à la traction d'une portion rigide du squelette de connexion électrique (3) est supérieure à 75 MPa.

3. Ensemble de transmission d'énergie électrique selon la revendication 1, dans lequel une jonction de la couche de cuivre (32) et de l'âme de fil en aluminium (31) contient une couche de transition cuivre-aluminium (33) formée par des atomes de cuivre et des atomes d'aluminium pénétrant les uns dans les autres ou se combinant les uns avec les autres ;
de préférence dans lequel
la couche de transition cuivre-aluminium (33) comprend au moins 39 % en poids d'un mélange cuivre-aluminium.

4. Ensemble de transmission d'énergie électrique selon la revendication 1, dans lequel une couche de solution solide cristalline cuivre-aluminium dans laquelle les atomes de cuivre et les atomes d'aluminium pénètrent les uns dans les autres est formée entre l'âme de fil en aluminium (31) et la couche de cuivre (32) ;
de préférence dans lequel
un pourcentage massique de l'élément cuivre dans la couche de solution solide cristalline cuivre-aluminium est de 5 % à 93 %.

5. Ensemble de transmission d'énergie électrique selon la revendication • , dans lequel la taille radiale de l'âme de fil en aluminium (31) est directement proportionnelle à la taille radiale de la couche de cuivre (32) ;
ou
dans lequel une superficie en coupe de la couche de cuivre (32) représente au moins 3 % d'une superficie en coupe du squelette de connexion électrique (3) ;
ou
dans lequel l'âme de fil en aluminium (31) est une structure creuse.

6. Ensemble de transmission d'énergie électrique selon la revendication 1, dans lequel l'ailette de dissipation de chaleur (4) est formée intégralement avec le matériau composite cuivre-aluminium.

7. Ensemble de transmission d'énergie électrique selon la revendication 1,
dans lequel la hauteur radiale maximale des ailettes de dissipation de chaleur (4) est égale à 50 % à 260 % de l'épaisseur radiale maximale de la couche de cuivre (32).

8. Ensemble de transmission d'énergie électrique selon la revendication 1, dans lequel l'ailette de dissipation de chaleur (4) est agencée en une forme de spirale dans une direction axiale de la couche de cuivre (32).

9. Ensemble de transmission d'énergie électrique selon la revendication 8, dans lequel le pas de vis minimal de la forme de spirale est le diamètre extérieur maximal du squelette de connexion électrique (3) ;
ou
dans lequel au moins deux desdites spirales sont agencées alternativement dans la direction axiale de la couche de cuivre (32).

10. Ensemble de transmission d'énergie électrique selon la revendication 1, dans lequel une couche isolante (5) est fournie sur et placée autour de la périphérie de l'ailette de dissipation de chaleur (4).

11. Ensemble de transmission d'énergie électrique selon la revendication 1 ou 10, dans lequel une couche de blindage et une couche isolante extérieure (5) sont en outre fournies sur et placées autour de la périphérie de la couche isolante (5) ;
de préférence dans lequel
le connecteur (1) comprend une coquille intérieure présentant un effet de blindage, et la couche de blindage est connectée électriquement à la coquille intérieure ;
de préférence dans lequel
le matériau de la coquille intérieure est un matériau métallique conducteur ou polymère conducteur.

12. Véhicule, dans lequel le véhicule comprend l'ensemble de transmission d'énergie électrique selon l'une quelconque des revendications 1 à 11.
